# EUROPÄISCHE PATENTSCHRIFT

(11) **EP 1 129 607 B1**
(45) Veröffentlichungstag und Bekanntmachung des Hinweises auf die Patenterteilung: **31.08.2005**
(21) Anmeldenummer: 01102290.2
(22) Anmeldetag: 01.02.2001
(51) Int. Cl.: A01C 9/00, A01B 73/06, A01B 73/00

(54) **Kartoffellegemaschine**
Potato planter
Machine à planter les pommes de terre

(30) Priorität: 01.03.2000 DE 20003810 U
(43) Veröffentlichungstag der Anmeldung: 05.09.2001
(73) Patentinhaber: Schmidbauer, Anton, 93098 Moosham (DE)
(72) Erfinder: Schmidbauer, Anton, 93098 Moosham (DE)
(74) Vertreter: Graf, Helmut

(56) Entgegenhaltungen:
- DE-A- 1 757 198
- DE-A- 2 514 588
- US-A- 2 710 200
- US-A- 3 982 671
- US-A- 4 664 202
- US-A- 5 429 195

## Beschreibung

Die Erfindung bezieht sich auf eine Kartoffellegemaschine gemäß Oberbegriff Patentanspruch 1.

Kartoffellegemaschinen sind bekannt, insbesondere auch in ihrer Ausbildung zum gleichzeitigen Legen in mehreren Reihen. Hierfür ist eine der Anzahl dieser Reihen entsprechende Anzahl von Legeaggregaten vorgesehen, und zwar in einer Reihe aufeinanderfolgend am Rahmen oder einem entsprechenden Träger dieses Rahmens. Durch die Vielzahl der Legeaggregate weist die von diesen gebildete Legeaggregatanordnung eine erhebliche Länge auf, so daß die Breite, die die Kartoffellegemaschine beim Arbeiten auf dem Feld, d.h. im Arbeitszustand aufweist, die für das Fahren auf öffentlichen Straßen und Wegen zulässige Fahrzeugbreite weit überschreitet. Bekannte Kartoffellegevorrichtungen sind daher so ausgebildet, daß das Fahren auf öffentlichen Straßen und Wegen in einer horizontalen Achsrichtung erfolgt, die quer zu der horizontalen Längsachse der Kartoffellegevorrichtung liegt, in der diese beim Arbeiten auf dem Feld bewegt wird. Dies ist allerdings nur mit einer aufwendigen Fahrwerkskonstruktion möglich.

Bekannt ist weiterhin eine Kartoffellegemaschine (DE-A-17 57 198), die an einem fahrbaren Rahmen mehrere Legeaggregate nebeneinander aufweist, die jeweils einen eigenen Speicher für die zu legenden Kartoffeln besitzen. Um die Breite der Kartoffellegemaschine für ein Fahren auf öffentlichen Straßen und Wegen zu reduzieren, sind die beiden außenliegenden Legeaggregate abnehmbar am Rahmen befestigt und können dann für das Fahren auf öffentlichen Straßen oder Wegen von dem Hauptrahmen abgenommen und an einem an der Rückseite des fahrbaren Rahmens vorgesehenen Hilfsrahmen durch Aufstecken befestigt werden. Um diese Legeaggregate für das Wechseln zwischen dem Hauptrahmen und dem Hilfsrahmen handhabbar zu machen, ist es erforderlich, die Legeaggregate einschließlich ihrer Speicher mit reduziertem Gewicht herzustellen, was insbesondere auch ein geringes Speichervolumen bedingt und ein Nachfüllen der Einzelspeicher mit entsprechender Arbeitsunterbrechung bedeutet.

Aufgabe der Erfindung ist es, eine Kartoffellegevorrichtung aufzuzeigen, die diese Nachteile vermeidet. Zur Lösung dieser Aufgabe ist eine Kartoffellegevorrichtung entsprechend dem Patentanspruch 1 ausgebildet.

Durch das Ein- und Ausfahren der äußeren Legeaggregate ist es möglich, die erfindungsgemäße Vorrichtung schnell und problemlos aus dem Arbeitszustand in den Zustand zum Fahren auf öffentlichen Straßen und Wegen zu bringen und umgekehrt. Durch die rückwärtige Befülleinrichtung ist es möglich, den Bunker in besonders einfacher Weise insbesondere auch mit einem geeigneten Transportfahrzeug, beispielsweise unter Abkippen zu befüllen.

Weiterbildung der Erfindung sind Gegenstand der Unteransprüche.

Die Erfindung wird im folgenden anhand der Figuren an einem Ausführungsbeispiel näher erläutert. Es zeigen:
- Fig. 1: in sehr vereinfachter Darstellung und in Seitenansicht eine Kartoffellegemaschine gemäß der Erfindung in Seitenansicht, zusammen mit einem nur teilweise dargestellten Zugfahrzeug;
- Fig. 2: in vereinfachter Darstellung die Kartoffellegemaschine in Draufsicht.

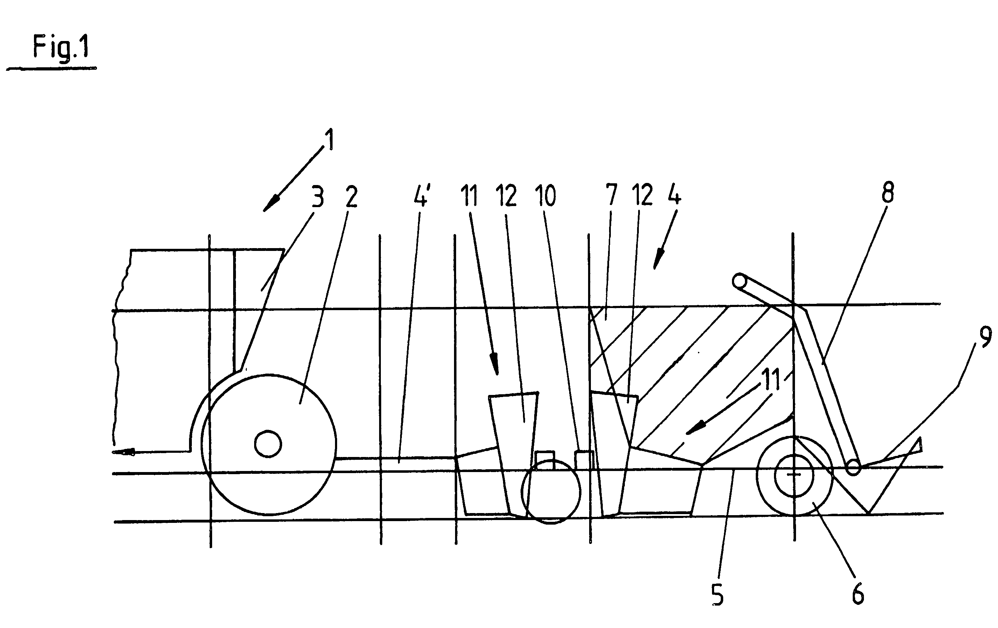

In den Figuren ist mit 1 allgemein ein Zugfahrzeug oder Schlepper bezeichnet, welcher in der Figur 1 sehr vereinfacht und nur teilweise dargestellt ist, d. h. mit seiner rückwärtigen Radachse und den zugehörigen Rädern 2 und mit dem Führerhaus 3. Über eine Zugeinrichtung 4' ist mit dem Zugfahrzeug 1 die Kartoffellegemaschine oder -vorrichtung 3 verbunden, die ebenfalls sehr schematisch dargestellt ist. Diese Legemaschine 4 weist an einem Rahmen 5 die üblichen Fahr- und Stützräder auf, von denen in den Figuren lediglich die Räder 6 der rückwärtigen Radachse dargestellt sind.

Am Rahmen 5 ist ein Bunker 7 zur Aufnahme der auszubringenden Kartoffeln vorgesehen. Der an der Oberseite offene Bunker 7 wird über einen Aufwärtsförderer 8 von der Rückseite der Kartoffellegemaschine 4 befüllt. Der Aufwärtsförderer 8 reicht hierfür mit seinem unteren Ende in eine an der Rückseite der Kartoffellegemaschine 4 vorgesehene Schütte 9, in die die Kartoffeln zum Befüllen des Bunkers von einem geeigneten Transportfahrzeug aus eingebracht bzw. abgekippt werden können. Das obere Ende des Förderers 8 endet über dem Bunker 7.

In Fahrtrichtung vor dem Bunker 7 sind an einem Querträger 10 des Rahmens 5, der (Querträger) sich in horizontaler Richtung quer zur Fahrtrichtung bzw. Längsachse L der Legemaschine 4, d.h. parallel zu den Achsen der Räder 6 erstreckt, in Längsrichtung dieses Trägers gegeneinander versetzt, mehrere Legeaggregate 11 vorgesehen, die die dem Fachmann bekannte Ausbildung aufweisen, jeweils einen Puffer-Speicher 12 für eine Zwischenlagerung einer bestimmten Menge an Kartoffeln besitzen und deren Pufferspeicher 12 im Verwendungsfall über Fördereinrichtungen aus dem Bunker 7 versorgt werden. Zum gleichzeitigen Legen von insgesamt acht Reihen weist die Kartoffellegemaschine 4 an dem Träger 10 acht derartige Legeaggregate 11 auf, die eine Legeaggregat-Anordnung bilden.

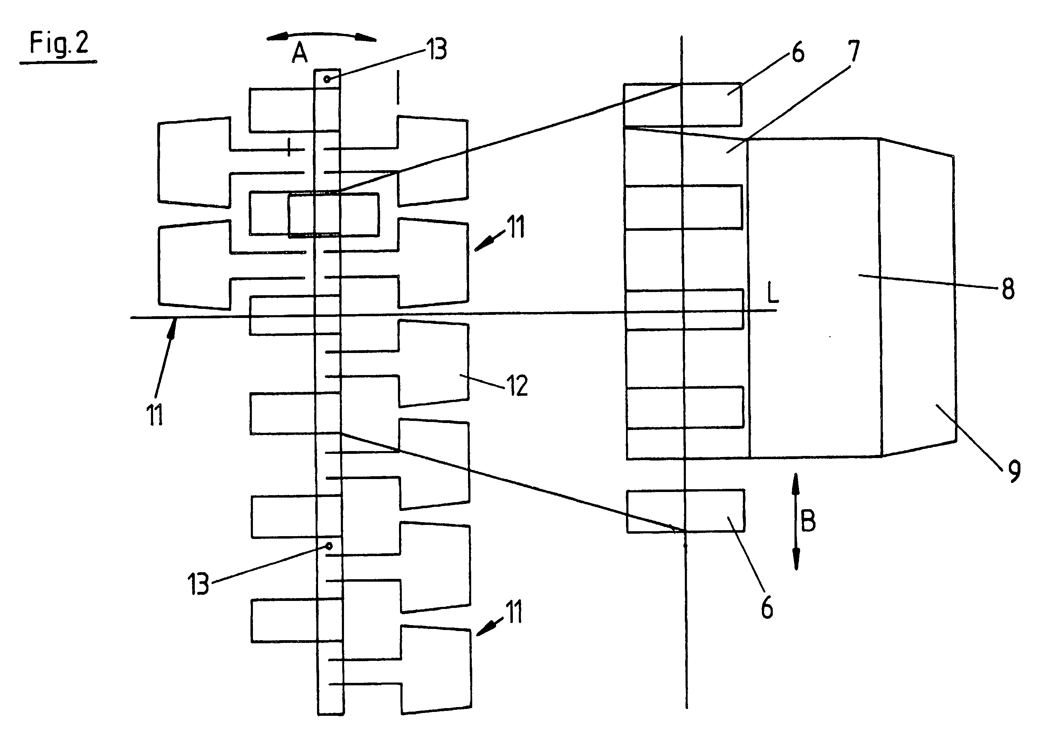

Wie die Figur 2 zeigt, nehmen die vier inneren Legeaggregate 11 in der Mitte des Trägers 10, die (Legeaggregate) in zwei Paaren beidseitig von der Längsachse L vorgesehen sind, eine Breite ein, die ein Fahren auf öffentlichen Wegen und Straßen ermöglicht. Die beiden äußeren, an den Enden des Trägers 10 vorgesehenen Legeaggregate 11 sind, wie in der Figur 2 oberhalb der Längsachse L dargestellt ist, um eine vertikale Achse einer Gelenkanornung, die in der Figur 2 mit 13 angedeutet ist, aus einer Arbeitsstellung in eine Nichtgebrauchsstellung klappbar (Doppelpfeil A), so daß diese beiden äußeren Legeaggregate 11 dann jeweils den inneren Legeaggregaten 11 in Richtung der Längsachse L gegenüberliegen und gegenüber den inneren Legeaggregaten 11 in Fahrtrichtung nach vorne versetzt sind.

Die Figur 2 zeigt unterhalb der Längsachse L den Gebrauchszustand der Kartoffellegemaschine, in dem (Gebrauchszustand) auch die beiden äußeren Legeaggregate 11 um die Gelenkanornung 13 in die Gebrauchslage geschwenkt sind, d. h. in Richtung der Längserstreckung des Trägers 10 in einer Reihe mit den inneren Legeaggregaten 11 angeordnet sind.

Wie die Figur 2 weiterhin zeigt, sind auch die Räder 6 aus einem Zustand zum Fahren auf öffentlichen Straßen und Wegen, wie er in der Figur 2 oberhalb der Längsachse L angedeutet ist, in einen Zustand bewegbar, wie er in der Figur 2 unterhalb der Längsachse L angedeutet ist und in dem die beiden Räder 6 einen vergrößerten Abstand voneinander aufweisen, um so bei in den Arbeitszustand geschwenkten äußeren Legeaggregaten 11 die Stabilität der Kartoffellegemaschine 4 zu erhöhen (Doppelpfeil B).

Die Erfindung wurde anhand der Figuren an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird, so ist es beispielsweise möglich, daß die äußeren Legeaggregate 11, die im Gebrauchszustand der Kartoffellegevorrichtung über eine Fahrzeugbreite vorstehen, die ein Fahren auf öffentlichen Wegen oder Straßen nicht zuläßt, nicht durch Schwenken, sondern auf andere Weise, beispielsweise durch seitliches Verschieben und gleichzeitiges Anheben bzw. Absenken zwischen dem Nichtgebrauchszustand und dem Gebrauchs- bzw. Arbeitszustand zu bewegen.

Weiterhin ist es auch möglich, an der Kartoffellegevorrichtung 4 Taster oder Sensoren vorzusehen, die ein optimales Führen oder Lenken der Kartoffellegevorrichtung 4 und/oder der einzelnen Legeaggregate 11 entlang der für das Legen der vorbereiteten Dämme sicherstellt.

### Bezugszeichenliste

- 1: Zugfahrzeug oder Schlepper
- 2: Schlepper, Hinterräder
- 3: Fahrerhaus
- 4: Kartoffel legemaschine
- 4': Zugeinrichtung
- 5: Rahmen
- 6: Rad
- 7: Bunker
- 8: Aufwärtsförderer
- 9: Schütte
- 10: Träger für Legeaggregate
- 11: Legeaggregat
- 12: Zwischenspeicher
- 13: Gelenk
- A, B: Pfeil
- L: Längsachse

## Patentansprüche

1. Kartoffellegemaschine mit einem fahrbaren Rahmen (5), mit einer Legeaggregat-Anordnung am Rahmen (5), die zum gleichzeitigen Legen in mehreren Reihen mehrere Legeaggregate (11) aufweist, die in einer Achsrichtung quer bzw. senkrecht zu einer Längsachse (L) der Legevorrichtung (4) aufeinanderfolgend vorgesehen sind und im Verwendungsfall eine Reihe von Legeaggregaten bilden,wobei wenigstens ein äußeres Legeaggregat (11) an wenigstens einem Ende der Legeaggregat-Anordnung aus einer Gebrauchsstellung, in der dieses äußere Legeaggregat (11) in Reihe mit den anderen Legeaggregaten angeordnet ist, zur Reduzierung der Breite der Kartoffellegemaschine in eine Nichtgebrauchsstellung bewegbar ist, in der das wenigstens eine äußere Legeaggregat (11) in einer Achsrichtung quer oder senkrecht zur Reihe versetzt ist und inneren Legeaggregaten (11) benachbart ist, und wobei die Legeaggregate (11) jeweils einen eigenen Speicher (12) für Kartoffeln aufweisen, **dadurch gekennzeichnet,**
**daß** an dem fahrbaren Rahmen ein für sämtliche Legeaggregate (11) gemeinsamer Bunker (7) vorgesehen ist, und dass Fördereinrichtungen vorgesehen sind, um die als Pufferspeicher ausgebildeten Speicher der Legeaggregate (11) aus dem gemeinsamen Bunker (7) mit Kartoffeln zu versorgen.

2. Kartoffellegevorrichtung nach Anspruch 1, **gekennzeichnet durch** eine Befüllvorrichtung (8, 9) für den Bunker (7) an der Rückseite der Kartoffellegevorrichtung (4).

3. Kartoffellegemaschine nach Anspruch 1 oder 2, **dadurch gekennzeichnet, daß** an jedem Ende der Legeaggregat-Anordnung wenigstens ein äußeres, zwischen einer Gebrauchsstellung und einer Nichtgebrauchsstellung bewegbares Legeaggregat (11) vorgesehen ist.

4. Kartoffellegemaschine nach einem der vorhergehenden Ansprüche, **dadurch gekennzeichnet, daß** an jedem Ende der Legeaggregatanordnung wenigstens zwei zwischen der Gebrauchsstellung und Nichtgebrauchsstellung bewegbare Legeaggregate (11) vorgesehen sind.

5. Kartoffellegemaschine nach einem der vorhergehenden Ansprüche, **dadurch gekennzeichnet, daß** das wenigstens eine äußere Legeaggregat durch Schwenken zwischen der Gebrauchsstellung und Nichtgebrauchsstellung bewegbar ist.

6. Kartoffellegemaschine nach einem der vorhergehenden Ansprüche, **dadurch gekennzeichnet, daß** die Befülleinrichtung wenigstens einen Aufwärtsförderer (8) aufweist, der eine von einer Abladefläche oder Schütte (9) bis über den Bunker (7) reichende Förderstrecke bildet.

7. Kartoffellegemaschine nach einem der vorhergehenden Ansprüche, **dadurch gekennzeichnet, daß** die am Rahmen (5) der Legevorrichtung vorgesehenen Räder (6) axial, d. h. in Richtung ihrer Radachsen aus einer Arbeitsposition, in der die Räder der Radachse einen größeren Abstand voneinander aufweisen, in eine Fahr-Position bewegbar sind, in der die Räder (6) der Radachse einen kleineren Abstand aufweisen, der ein Fahren auf öffentlichen Wegen oder Straßen ermöglicht.

8. Kartoffellegemaschine nach einem der vorhergehenden Ansprüche, **gekennzeichnet durch** ihre Ausbildung als von einem Zugfahrzeug (1) nachziehbare Vorrichtung.

## Claims

1. Potato-planting machine with a drivable frame (5), this frame (5) having a planting aggregate arrangement which, for simultaneous planting in several rows has several planting aggregates (11) which are provided one after another in an axial direction cross-wise or perpendicular to a longitudinal axis (L) of the planting device (4), and which when used form a row of planting aggregates, wherein to reduce the width of the potato-planting machine, at least one outer planting aggregate (11) on at least one end of the planting aggregate arrangement can be moved out of an operational position in which this outer planting aggregate (11) is arranged in a row with the other planting aggregates, into a non-operational position in which the at least one outer planting aggregate (11) is displaced in a axial direction cross-wise or perpendicular to the row and is adjacent to inner planting aggregates (11),
and wherein the planting aggregates (11) respectively have their own store (12) for potatoes,
**characterised in that**
provided on the drivable frame is a common bunker (7) for all the planting aggregates (11), and that conveyor devices are provided in order to supply the stores for the planting aggregates (11), these [stores] being designed as buffer stores, with potatoes from the common bunker (7).

2. Potato-planting device in accordance with claim 1, **characterised by** a filler device (8, 9) for the bunker (7) on the rear of the potato-planting device (4).

3. Potato-planting device in accordance with claim 1 or 2, **characterised in that** provided at each end of the planting aggregate arrangement there is at least one outer planting aggregate (11) that can be moved between an operational position and a non-operational position.

4. Potato-planting device in accordance with one of the preceding claims, **characterised in that** provided at each end of the planting aggregate arrangement there are at least two planting aggregates (11) that can be moved between an operational position and a non-operational position.

5. Potato-planting device in accordance with one of the preceding claims, **characterised in that** the at least one outer planting aggregate can be moved between an operational position and a non-operational position by means of pivoting.

6. Potato-planting device in accordance with one of the preceding claims, **characterised in that** the filler device has at least one upward conveyor (8), which forms a conveyor section that extends from an unloading area or chute (9) to above the bunker (7).

7. Potato-planting device in accordance with one of the preceding claims, **characterised in that** the wheels (6) provided on the frame (5) of the planting device can be moved axially, i.e. in the direction of their wheel axles, from a working position in which the wheels of the wheel axle have a greater distance from one another, into a driving position in which the wheels (6) of the wheel axle have a smaller spacing, which enables driving on public roads or highways.

8. Potato-planting device in accordance with one of the preceding claims, **characterised by** its design as a device that can be pulled along by a traction vehicle (1).

## Revendications

1. Machine à planter les pommes de terre comprenant un châssis mobile (5), un ensemble d'unités de plantation sur le châssis (5) qui présente, pour permettre une plantation simultanée sur plusieurs rangées, plusieurs unités de plantation (11), qui sont aménagées successivement dans une direction axiale transversalement ou perpendiculairement à un axe longitudinal (L) du dispositif de plantation (4) et qui, dans le cas d'utilisation, forment une série d'unités de plantation, dans laquelle au moins une unité de plantation extérieure (11), sur au moins une extrémité de l'ensemble d'unités de plantation, peut être déplacée entre une position d'utilisation, dans laquelle cette unité de plantation extérieure (11) est aménagée en série avec les autres unités de plantation, et une position de non utilisation pour réduire la largeur de la machine à planter des pommes de terre, position dans laquelle la au moins une unité de plantation extérieure (11) est déplacée dans une direction axiale transversalement ou perpendiculairement à la rangée et est contiguë aux unités de plantation internes (11), et dans laquelle les unités de plantation (11) présentent respectivement un silo propre (12) pour les pommes de terre,
**caractérisée en ce que**
il est prévu, sur le châssis mobile, une trémie (7) commune à toutes les unités de plantation et des dispositifs de transport sont prévus pour alimenter en pommes de terre, en provenance de la trémie commune (7), les silos des unités de plantation (11) qui se présentent sous la forme de silos tampons .

2. Dispositif pour planter des pommes de terre selon la revendication 1, **caractérisé par** un dispositif de remplissage (8, 9) pour la trémie (7) sur la face arrière du dispositif pour planter les pommes de terre (4).

3. Dispositif pour planter des pommes de terre selon la revendication 1 ou 2, **caractérisé en ce que**, à chaque extrémité de l'ensemble d'unités de plantation, il est prévu au moins une unité de plantation extérieure (11) mobile entre une position d'utilisation et une position de non utilisation..

4. Machine à planter des pommes de terre selon l'une quelconque des revendications, **caractérisée en ce que**, à chaque extrémité de l'ensemble d'unités de plantation, il est prévu au moins deux unités de plantation mobiles entre la position d'utilisation et la position de non utilisation (11).

5. Machine à planter des pommes de terre selon l'une quelconque des revendications, **caractérisée en ce que** la au moins une unité de plantation extérieure est mobile par pivotement entre la position d'utilisation et la position de non utilisation.

6. Machine à planter des pommes de terre selon l'une quelconque des revendications, **caractérisée en ce que** l'installation de remplissage présente au moins un transporteur ascendant (8) qui forme un trajet de transport allant d'une surface de déchargement ou goulotte de déversement (9) jusqu'au-dessus de la trémie (7).

7. Machine à planter des pommes de terre selon l'une quelconque des revendications, **caractérisée en ce que** les roues (6) prévues sur le châssis (5) du dispositif de plantation peuvent être déplacés axialement, c'est-à-dire en direction de leurs essieux, entre une position de travail, dans laquelle les roues de l'essieu présentent une plus grande distance mutuelle, et une position de conduite, dans laquelle les roues (6) de l'essieu présentent une distance plus petite, qui permet une conduite sur des voies ou des routes publiques.

8. Machine à planter des pommes de terre selon l'une quelconque des revendications, **caractérisée en ce qu'**elle se présente sous la forme d'un dispositif qui peut être tiré par un véhicule de traction (1).
